# EUROPEAN PATENT APPLICATION

(11) **EP 2 463 817 A1**
(43) Date of publication of application: **13.06.2012**
(21) Application number: 10194484.1
(22) Date of filing: 10.12.2010
(51) Int. Cl.: G06Q 20/00

(54) **System and method for the interoperability of different payment or transaction authorization platforms**

(71) Applicant: 1356382 Alberta Ltd., Calgary, AB T2K 0W1 (CA)
(72) Inventor: Mercia, Marcel, Calgary, AB T2K 0W1 (CA); Mercia, Paul, Okotoks, AB T1S 2A1 (CA)
(74) Representative: Bohest AG

(57) **Abstract**

A system, method and intermediary for effecting a payment account transaction at a point of sale on behalf of a registrant while avoiding disclosure of its payment account information at the point of sale. The system comprises a merchant device at the point of sale for generating a partial authorization request, an authorizing instrument for providing authentication information of an authorized representative and the intermediary, located remotely from the point of sale, for receiving the partial request and the authentication. The intermediary retrieves the registrant's payment account information using the authentication, combines it with the partial request to form an authorization request and forwards it along the transaction network for processing. The authentication information may arrive with a subset of transaction information. The authorizing instrument may be located at the point of sale. A requesting instrument may request the authorizing instrument to forward the authentication information.

## Description

The present disclosure relates to payment account transactions and, more particularly, to a system and method of substituting payment account information in such transactions.

Card payment instruments such as credit cards and debit cards represent a tremendous convenience for making in-person purchases, as they obviate the need to attend at banks or ATMs and to withdraw and hold large sums of money in anticipation of such purchases. However, with the increase in popularity of such card instruments, there has been an increased demand to use such card instruments in a wider variety of transactions, including online and telephone purchases, where the registrant (or cardholder) (and the registrant's card) are not co-located with the merchant at the point of sale which is typically defined in the context of such transactions as being the location of a merchant device, such as a merchant card terminal, merchant point of sale machine or card reader. The financial industry terms such transactions as "Card/Cardholder Not Present" (CNP) transactions. Conventional mechanisms for effecting such transactions involve conveying, to the merchant, sensitive payment account information, such as the name and number listed on the card, together with a security code, personal identification number (PIN), date of birth, home address, or other personal information known only to a legitimate registrant. Once such payment account information is provided, there is no guarantee that the merchant will not retain such information or even re-use it to make unauthorized purchases.

Additionally, while the use of such card instruments is generally acknowledged as a convenience over more traditional means of payment, the card instrument is either physically present at the point of sale or fall within the limited subset of allowable CNP transactions. It is sometimes inconvenient to have to bring the card along, for example, when a registrant is at an industrial job-site, near water, or on vacation, and potentially expose it to loss, theft or damage and the like. Moreover, potential purchases by a child or spouse may be frustrated if the registrant accompanies him or her at the point of sale simply to authorize the use of the card. Additionally, independent attempts to use the card by the child or spouse may be prohibited.

At the same time, the exploding popularity of using such card instruments has resulted in an exponential increase in so-called card fraud. Indeed, when a purchaser hands over one of these cards to a merchant to complete a purchase, the purchaser may be at risk of an unscrupulous person, who may or may not be an employee of the merchant, "skimming" or extracting payment account information at the time of the transaction or from records maintained for such transaction and later using such information to make unauthorized purchases using the skimmed card. As such, there is a growing reluctance to allow a merchant to handle the card at the point of sale, especially outside the direct view of the purchaser.

The embodiments of the present disclosure will now be described by reference to the following figures, in which:
**FIGURE 1** is a block diagram illustrating an example embodiment of a system and process for effecting a conventional credit card transaction;
**FIGURE 2** is a block diagram illustrating an example embodiment of a system and process for effecting a credit card transaction, in accordance with an example embodiment of the present disclosure, by an authorized representative without providing payment account information at the point of sale;
**FIGURE 3** is a block diagram illustrating an example embodiment of the intermediary of **Figure 2**;
**FIGURE 4** is a block diagram illustrating an example embodiment of a system and process for effecting a credit card transaction, in accordance with an example embodiment of the present disclosure, by an unregistered purchaser without providing payment account information at the point of sale;
**FIGURE 5** is a block diagram illustrating an example embodiment of a system and process for effecting a credit card transaction, in accordance with an example embodiment of the present disclosure, in which an authorized representative conveys biometric data to the intermediary through sensors at the point of sale;
**FIGURE 6** is a block diagram illustrating an example embodiment of the intermediary of **Figure 5**; and
**FIGURE 7** is a flow chart showing example actions taken in an example embodiment of a method for making a payment account transaction, in accordance with an example embodiment of the present disclosure.

Like reference numerals are used in the drawings to denote like elements and features.

The present disclosure provides an example embodiment of a system for effecting a payment account transaction such as a credit card purchase without disclosing a registrant's payment account information at the point of sale. The system comprises a merchant device in data communication with an intermediary located remotely from the point of sale, the intermediary being also in data communication with a transaction network. When a payment account transaction is to be effected without the physical use of a card, authentication information associated with a registrant is conveyed to the intermediary by an authorizing instrument, which may be a sensor, while the merchant device transmits a partial authorization request comprising transaction information to the intermediary. The intermediary looks up payment account information of the registrant based on the authentication information and combines the payment account information with the partial authorization request to formulate an authorization request for transmission to the transaction network for processing in conventional fashion, including, in some example embodiments, transmission of an authorization response to the merchant device.

In some example embodiments, the authentication information is conveyed directly to the intermediary by the authorizing instrument through an electronic communication, including without limitation, an e-mail, a telephonic communication, an electronic message such as Short Message Service (SMS), Multimedia Message Service (MMS) or PIN message.

In some example embodiments, the authentication information is biometric data unique to a purchaser, obtained at a sensor, including without limitation, a fingerprint, voice print, retinal or iris scan or DNA sensor. In some example embodiments, the sensor is in data communication with the merchant device. In some example embodiments the sensor is integral with the merchant device.

In some example embodiments, the merchant device is also in data communication directly with the transaction network. In some example embodiments, the merchant device may be configured to transmit transaction information in the form of a partial authorization request to the intermediary as opposed to the transaction network by an output selection input on the merchant device.

In some example embodiments, the authorizing instrument obtains a subset of the transaction information and conveys the subset transaction information in addition to the authentication information in order to facilitate combining the payment account information with the partial authorization request received from the merchant device to formulate the authorization request.

In some example embodiments, a subset of the transaction information may be conveyed by a requesting instrument to the authorizing instrument with a request that the authorizing instrument convey the authentication information with the subset of transaction information to the intermediary.

In some example embodiments, the intermediary transmits an authorization response to the registrant. In some example embodiments, the intermediary transmits an authorization response to the authorizing instrument. In some example embodiments, the intermediary transmits such authorization response through an electronic communication, including without limitation, an e-mail, a telephonic communication or an electronic message such as SMS, MMS or PIN message. In some example embodiments, the authorization response is transmitted along a similar electronic communication as the electronic communication used to convey the authentication request.

The present disclosure also provides an example embodiment of a method for effecting a payment account transaction without disclosing a registrant's payment account information at the point of sale. The method comprises, at a location remote from the point of sale, receiving authentication information of an authorized representative of the registrant, retrieving the registrant's payment information using the authentication information, combining a partial authorization request comprising transaction information and the payment account information into an authorization request and forwarding the authorization request to a transaction network for processing.

The present disclosure also provides an example embodiment of an intermediary node for effecting a payment account transaction without disclosing a registrant's payment account information at the point of sale. The intermediary is located remotely from the point of sale and comprises an account database for maintaining associations between authentication information and the registrant's payment account information and a transaction file handler for receiving authentication information of an authorized representative of the registrant from an authorizing instrument, retrieving the registrant's payment account information from the account database, receiving from a merchant device at the point of sale, a partial authorization request comprising transaction information and combining the partial authorization request and the payment account information into an authorization request and forwarding the authorization request to a transaction network for processing.

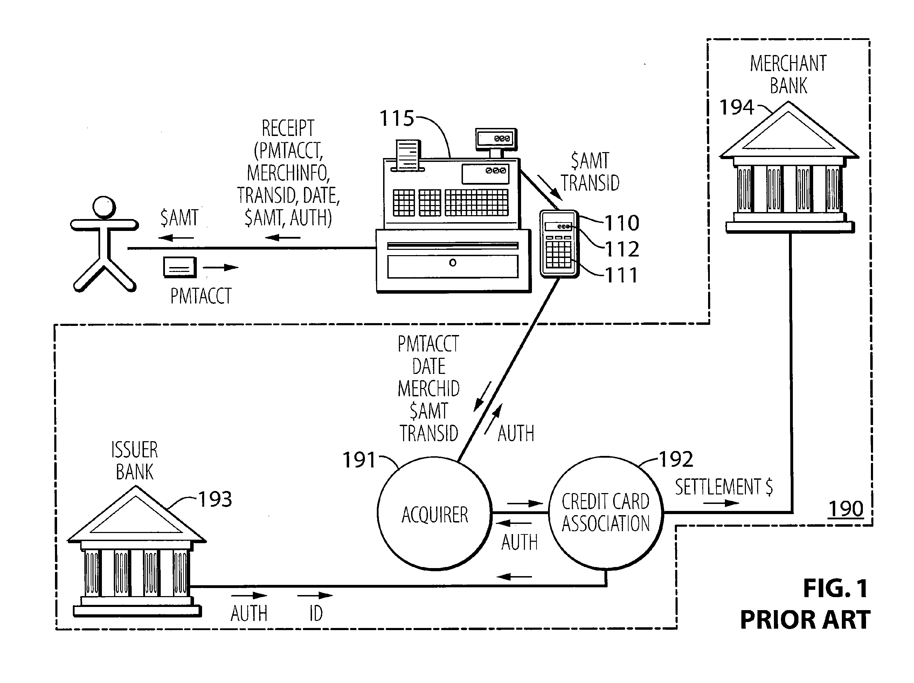

Turning now to **Figure 1**, there is shown a block diagram illustrating an example embodiment of a system and process for effecting a conventional credit card transaction. A merchant device **110**, for example a merchant card terminal, point of sale machine, card reader or chip reader, is at and defines the point of sale and in data communication with a transaction network **190** shown in dashed outline. In some example embodiments, the merchant device **110** may be in data communication with a cash register **115**. In some example embodiments, the communication link between the merchant device **110** and the transaction network **190** may be a wired or wireless telephonic connection, capable of voice or data communication or both, including without limitation at least one node of a public switched telephone network (PSTN) (not shown). In some example embodiments, the PSTN (not shown) makes use of internet communications along a network comprising the Internet, a wired or wireless local area network (LAN), an extranet, a metropolitan area network (MAN), a wide area network (WAN) or any combination of any of these. In some example embodiments, the merchant device **110** may be directly connected to such network.

The transaction network **190** may, in some example embodiments, comprise an acquirer **191**, a clearing agency **192**, an issuer bank **193** and a merchant bank **194**.

The merchant device **110** is in data communication with the acquirer **191** and generates, for a payment account transaction attempt, an authorization request for transmission to the acquirer **191**.

Conventionally, authorization requests generated for payment account transactions such as a credit card purchase may comprise payment account information (such as a credit card number, name of account holder or authorized representative or both, security code, PIN, date of birth, home address, other personal information known only to a legitimate registrant or any combination of these) and transaction information (such as a merchant identifier, a transaction date, a transaction identifier, a transaction amount or any combination of these).

Credit cards are issued to cardholders on application and approval by the issuer bank **193**. Typically the issuer bank belongs to a clearing agency **192** (typically only one) that controls the issue of credit cards of a given family such as the credit card association for VISA^{™} and analogous entities for other financial instruments. Conventionally, the credit card issued by the issuer bank **193** has embossed on its surface the credit card number and the name of the authorized representative, who may be the registrant. The credit card typically also has a magnetic stripe or chip, for example, on which is encoded certain financial and credit data including, typically, the payment account information. In some cases, the credit card also contains a number of security features, including a data chip containing certain financial and credit information including the payment account information as well as security data. The clearing agency **192** also includes clearing agencies for financial instruments other than credit cards. Conventionally, the authorization request is initiated and the payment account information is obtained by swiping the credit card's magnetic stripe through the merchant device **110** and automatically inserted into the authorization request generated thereby.

In some example embodiments, the authorization request may be initiated by reading information from a chip within the card or other payment instrument.

In some example embodiments, the authorization request may be initiated by manually entering the payment account information into the merchant device **110** using a keypad **111** on the merchant device **110**, for example, when the magnetic strip becomes unreadable. In some example embodiments, the authorization request may be initiated and the payment account information and other information may be obtained by inserting the data chip on the credit card into the merchant device **110**. In either situation, the payment account information is automatically inserted into the authorization request generated thereby.

Typically, the payment account information is in a format that enables the acquirer **191** to recognize that the authorization request is for a credit card transaction (as opposed to a PIN debit card transaction), which credit card family is involved and which issuer bank **193** issued the credit card. In some example embodiments, the credit card family, issuer bank **193**, merchant bank **194** or any combination of these may also be explicitly provided in the authorization request.

The merchant identifier typically uniquely identifies a merchant and is issued to the merchant by the acquirer **191**. In some example embodiments, the merchant identifier is hard-coded into the merchant device **110** and automatically inserted into any authorization request generated thereby. In some example embodiments, the merchant identifier also identifies the merchant bank **194** and account number to be associated with the merchant for purposes of the transaction.

In some example embodiments, the transaction date and transaction identifier are generated by initiating the transaction at the merchant device **110**, for example by swiping the credit card, entering the payment account information at the keypad **111** or inserting the data chip into the merchant device **110**. In some example embodiments, the transaction amount may be entered at the keypad **111** after the transaction is initiated. In some example embodiments, the transaction identifier may be generated by the cash register **115** and the transaction date, transaction identifier and transaction amount may be electronically communicated by the cash register **115** to the merchant device **110** upon initiation of the authorization request.

However generated, the authorization request for each proposed transaction is transmitted to the acquirer **191**.

In addition to generating an authorization request, the merchant device **110** receives at least one authorization response corresponding to each authorization request sent from the acquirer **191** and generates a merchant notification in response.

Conventionally, the merchant notification in response to an authorization request is in the form of a printed receipt, which summarizes the authorization request and response and if authorized, provides a space whereby the purchaser may complete the transaction by signing the receipt. If the authorization request is declined, this will be indicated on the printed receipt and there will be no opportunity for the purchaser to sign the receipt. In some example embodiments, the notification may be in the form of a message displayed on a display **112** of the merchant device **110** instead of or in addition to the printed receipt.

In some example embodiments, especially if the authorization request is declined, an additional action request to be undertaken may be communicated by the acquirer **191** to the merchant device **110** which may include delaying processing the transaction, requesting additional security information or retaining the credit card.

The acquirer **191** is in data communication with at least one merchant device **110** and at least one clearing agency **192** (only one shown). In some example embodiments, the acquirer **191** owns and leases (or otherwise supplies) to the merchant, the merchant device **110.**

The acquirer **191** gives effect to the mechanics of the payment account transaction. It receives authorization requests from the merchant device **110** and forwards it to the appropriate clearing agency **192**. Additionally, the acquirer receives at least one authorization response corresponding to each authorization request from the clearing agency **192** and forwards it to the entity from which the authorization request emanated, in this case, the merchant device **110**.

In some example embodiments, the acquirer **191** is capable of recognizing a number of different credit card families and forwards authorization requests corresponding to each family to the associated clearing agency **192**. In some example embodiments, the acquirer **191** is also capable of recognizing and handling PIN debit card transactions. This allows the use of a single merchant device **110** for both credit card and PIN debit card transactions from a plurality of card families and merchant banks **194.**

The clearing agency **192** may be an association of issuer banks **193** (who each issue credit cards in a given family) and sets transaction terms for merchants, issuer banks **193** and merchant banks **194** related to transactions applicable to such credit card family. The clearing agency **192** is in data communication with the acquirer **191**, the issuer bank **193** and the merchant bank **194**. The clearing agency **192** receives from the acquirer **191**, authorization requests relating to payment account transactions using a credit card in the credit card family, processes such requests and distributes them among the various issuer banks **193** for processing. The clearing agency **192** receives authorization responses from the issuer banks **193** and forwards them to the acquirer **191**. Finally, when the time comes for settling the payment account transactions (typically within two to four business days after the transaction has been approved), the clearing agency **192** receives funds transfers corresponding to the transaction amount of approved payment account transactions from the issuer banks **193** and deposits them in the corresponding merchant banks **194**. A funds transfer received by the clearing agency **192** may include a merchant ID identifying the merchant device **110** or may include other information from the authorization request or authorization response through which the clearing agency **192** can identify which merchant bank is associated with the funds transfer. Alternatively, where the merchant bank **194** has an account with the acquirer **191**, the acquirer **191** can create an association between the merchant ID and the corresponding account of the merchant bank **194**.

The issuer bank **193** is the financial institution that issues the credit card to the registrant. It bills the registrant for repayment, typically on a monthly basis. The issuer bank is in data communication with the clearing agency **192** and receives authorization requests relating to transactions using credit cards issued by it from the clearing agency **192**. The issuer bank **193** generates an authorization response based on a number of factors, including without limitation, the amount of the requested transaction, the credit remaining available to the registrant and whether there is any suggestion of fraudulent activity, including without limitation, a suspicious pattern of transactions or the absence of certain security information. The issuer bank **193** transmits the authorization response to the clearing agency **192**. Finally, when the time comes for settling the approved transaction, the issuer bank **193** registers the transaction against the registrant's account and forwards the transaction amount of the approved payment account transaction to the clearing agency **192**.

The merchant bank **194** is the financial institution that holds the account associated with the merchant for purposes of the transaction. It is in data communication with the clearing agency **192**. The merchant bank receives the transaction amount of the approved payment account transaction from the clearing agency **192** and deposits it into the merchant's account.

The foregoing is a rough summary of the credit card authorization and settlement process. It does not discuss how fees are generated and extracted from the transaction amount as these will be apparent to those having ordinary skill in this art.

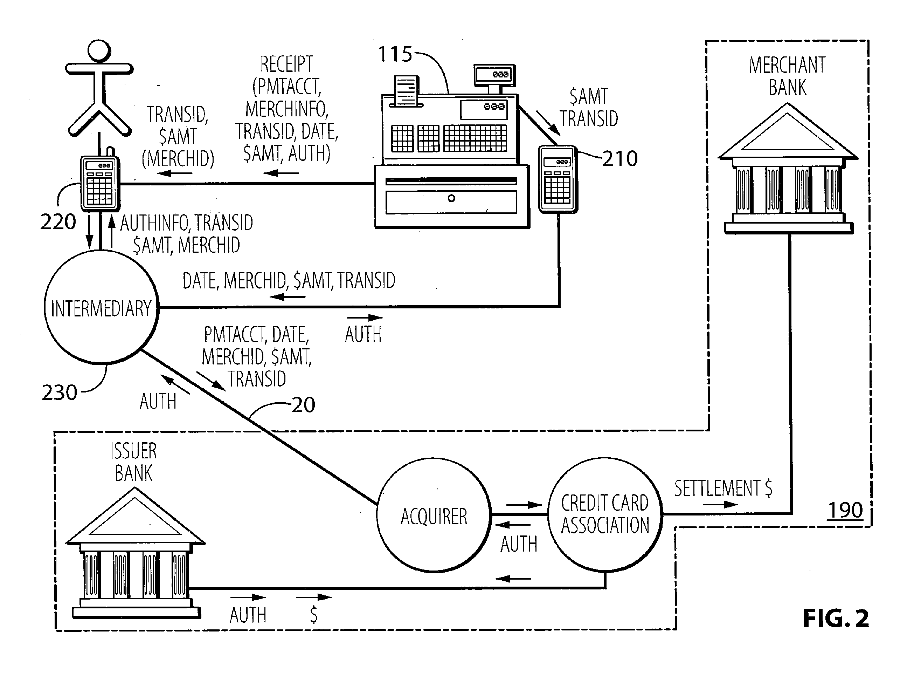

Turning now to **Figure 2**, there is shown a block diagram illustrating an example embodiment of a system and process for effecting a credit card transaction in accordance with an example embodiment of the present disclosure by an authorized representative without providing payment account information at the point of sale. For purposes of the present disclosure, an authorized representative is one who is in possession of authentication information suitable to permit the release of payment account information in accordance with this example embodiment. An authorized representative need not be limited to the registrant. For example, the authorized representative may be a trusted employee or family member of the registrant. In some example embodiments, the issue of additional credit cards incurs an additional fee from the issuer bank **193**. Such fees could be dispensed with by designating authorized representatives. Alternatively, the fees could be diverted from the issuer bank **193** to another fee-charging entity (for example the acquirer **191** (or the intermediary **230** as discussed below) by charging a fee for designating an authorized representative who is not the registrant.

This example embodiment dispenses with the supply to the merchant of any confidential and sensitive payment account information by the authorized representative, including without limitation, by physical presentation of the credit card at the point of sale. The system, now shown generally at **20**, comprises a merchant device **210** at the point of sale, an authorizing instrument **220** representative of an authorized representative, and an intermediary **230** at a location remote from the point of sale.

As in the example embodiment of **Figure 1**, the merchant device **210** is in communication with the transaction network **190** comprising the acquirer **191**, clearing agency **192**, issuer bank **193** and merchant bank **194**. The merchant device **210** is similar in configuration and function to the merchant device **110** of **Figure 1**, but modified in at least two aspects.

First, the merchant device **210** is in data communication with the intermediary **230** in addition to being in data communication with the cash register **115** and the acquirer **191**. Second, the merchant device **210** may, in some example embodiments, have an input selection such, as depressing a push button (not shown) which will direct it to send its output (that is, a partial authorization request) to the intermediary **230** for completion, rather than to the acquirer **191**.

In the example embodiment described in **Figure 2**, the transaction request is initiated by the input selection at the merchant device **210**, as opposed to the swiping of the credit card at the merchant device **210**, manual entry of the payment account information at the keypad **111** or insertion of the data chip into the merchant device **210**. In some example embodiments, these initiating actions remain available at the merchant device **210** for conventional credit card transactions.

Nevertheless, when a transaction request is initiated by the input selection at the merchant device **210**, the partial authorization request comprising some or all of the merchant identifier, transaction date, transaction identifier and transaction amount (but not the payment account information) is generated for transmission to the intermediary **230**. Although no card has been presented to the merchant device **210**, because the partial authorization request does not contain any payment account information, the partial authorization request may be generated and transmitted to the intermediary **230**.

The authorizing instrument **220** is a source of authentication information and may comprise a communication device by which an authorized representative may convey authentication information directly to the intermediary **230**. The authorizing instrument **220** is in data communication with the intermediary **230** and allows the specification of authentication information to it. The authorizing instrument **220** may be a wired or wireless telephone, smartphone, personal digital assistant (PDA), pocket, mobile, laptop or desktop computer or any combination of any of these. In some example embodiments, the authorizing instrument **220** is a general purpose device routinely carried by an authorized representative, which may incidentally be used to convey authentication information to the intermediary **230**. In some example embodiments, the authorizing instrument **220** may be located at the point of sale. In some example embodiments, the authorizing instrument may be located remotely from the point of sale, for example, in the context of an online or telephone transaction.

In some example embodiments, the communication link between the authorizing instrument **220** and the intermediary **230** may be a wired or wireless telephonic connection, capable of voice or data communication or both, including without limitation at least one node of a public switched telephone network (PSTN) (not shown). In some example embodiments, the PSTN (not shown) makes use of internet communications along a network comprising the Internet, a wired or wireless local area network (LAN), an extranet, a metropolitan area network (MAN), a wide area network (WAN) or any combination of any of these. In some example embodiments, the authorizing instrument **220** may be directly connected to such network. In such example embodiments, the authentication information may be conveyed from the authorizing instrument **220** to the intermediary by an oral communication, a sequence of touch-tone digits or a data communication.

In some example embodiments, the communication link between the authorizing instrument **220** and the intermediary **230** may be by electronic communication, including without limitation, by e-mail or electronic message such as Short Message Service (SMS), Multimedia Message Service (MMS), PIN message, or other conventional information conveyance.

In some example embodiments, the authentication information may comprise an account identifier, a user identifier, a login, a password or any combination of any of these that is registered with or assigned by the intermediary **230** or both.

In some example embodiments, a subset of the transaction information, obtained from the merchant device **210** including, without limitation, the merchant identifier, the transaction identifier and transaction amount, is communicated by the authorizing instrument **220** to the intermediary **230** together with the authentication information. Such subset of the transaction information provided to the authorizing instrument **220** may be communicated with the authentication information to the intermediary **230** to facilitate the intermediary **230** associating the payment account information of the registrant associated with the authentication information with the partial authorization information.

The mechanism by which the subset of the transaction information is provided to the authorizing instrument **220** is immaterial to the present disclosure. In some example embodiments, the subset of the transaction information could be provided orally or in written form from a printout at or electronically from the merchant device **210** and transcribed or otherwise entered into the authorizing instrument **220**.

In some example embodiments, an application residing on the authorizing instrument **220** may facilitate data entry of the authentication information and obtained transaction information obscuring the particular information conveying framework employed. In some example embodiments, the authentication information and obtained transaction information may be directly entered into the information conveying framework.

The information conveying framework may be, for example, an e-mail message or text message. In some example embodiments, such information-conveying framework may append other information to the message, including without limitation, a source address, a destination address, a date stamp, a time stamp or any combination of any of these.

An example message format may be in the form:

| ddddd.cc*mmmm*pppp | |
|---|---|
| where ddddd.cc | is the transaction amount in dollars (ddddd) and cents (cc); |
| * | is a field delimiter; |
| mmmm | is the merchant identifier (or transaction information; and |
| pppp | is the authentication information. |

The intermediary **230** is located remotely from the point of sale but in data communication with at least one merchant device **210**, the acquirer **191** and the authorizing instrument **220**. The intermediary **230** receives the partial authorization request from the merchant device **210** and authentication information (together, in some example embodiments, with the subset of transaction information) from the authorizing instrument **220**, looks up the payment account information corresponding to the registrant using the authentication information, matches up the payment account information with the partial authorization request using the subset of the transaction information provided by the authorizing instrument **220** and generates an authorization request from the partial authorization request and the payment account information, which it forwards to the acquirer **191**.

In addition to generating an authorization request, the intermediary **230** receives, from the acquirer **191**, at least one authorization response corresponding to each authorization request it generates, and forwards it to the entity, such as the merchant device **210**, from which the (partial) authorization request emanated. In some example embodiments, the intermediary **230** also forwards the authorization response to the entity from which the authentication information was obtained, that is, the authorizing instrument **220**.

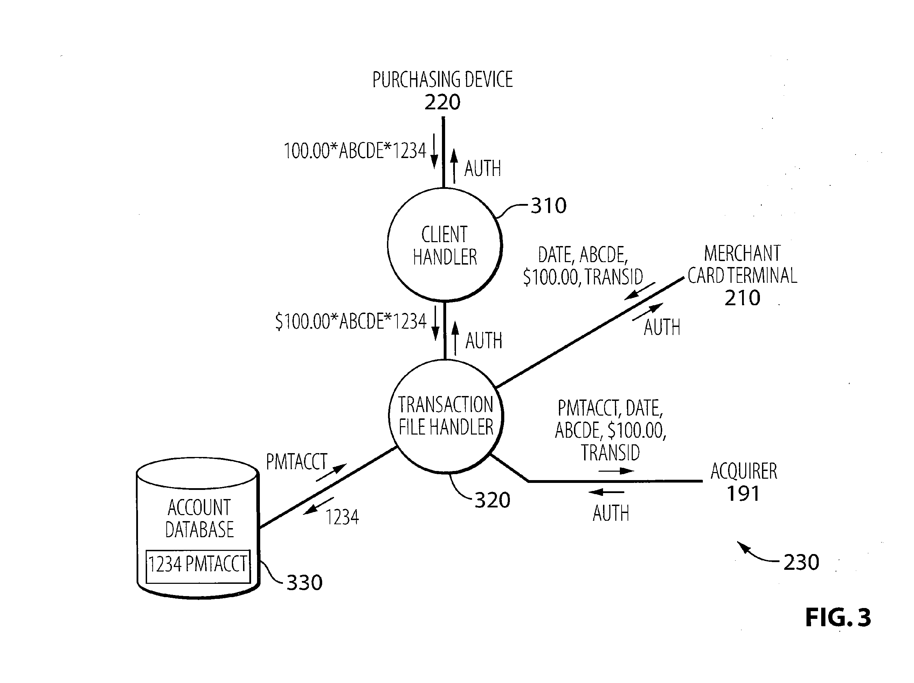

Turning now to **Figure 3**, there is a block diagram illustrating an example embodiment of components of the intermediary **230**. It comprises a client handler **310**, a transaction file handler **320** and an account database **330**.

In some example embodiments, the intermediary **230** or indeed the components of the intermediary **220** may comprise a plurality of nodes or processors in a distributed computer network.

The client handler **310** is in data communication with the authorizing instrument **220** and the transaction file handler **320**. The client handler **310** receives messages from the authorizing instrument **220** containing authentication information (and in some example embodiments, a subset of the transaction information) and processes them to extract the authentication information. The client handler **310** then forwards the authentication information to the transaction file handler **320**.

In some example embodiments, the client handler **310** also receives authorization responses back from the transaction file handler **320** and forwards them to the authorizing instrument **220**. In some example embodiments, the authorization response is sent along the communication link along which the authentication information was received.

The transaction file handler **320** is in data communication with the client handler **310**, the account database **330**, the merchant device **210** and the acquirer **191**. The transaction file handler **320** receives authentication information from the client handler **310** and accesses the account database **330** using the authentication information to obtain the payment account information corresponding to the authentication information. The transaction file handler **320** also receives partial authorization requests from the merchant device **210** and matches up these partial authorization requests with the payment account information, in some example embodiments, by using the subset of the transaction information. When a partial authorization request is matched up with payment account information, the transaction file handler **320** generates an authorization request from this information and forwards it to the acquirer **191** for processing.

The transaction file handler **320** also receives back at least one authorization response from the acquirer **191** corresponding to each authorization request it forwarded to the acquirer **191**. The transaction file handler **320** forwards the authorization response to the merchant device **210** for processing. In some example embodiments, the transaction file handler **320** forwards the authorization response to the client handler **310** for processing.

The account database **330** maintains payment account information for registrants, together with at least one set of authentication information, such as an account identifier, a user identifier, a login, a password of any combination of these, associated with each registrant. If the intermediary **230** receives a message containing authentication information corresponding to a registrant, the registrant's payment account information is returned to the transaction file handler **320** for insertion into an authorization request. A plurality of sets of authentication information may be associated with each registrant. Thus, unique sets of authentication information may be assigned to business partners, employees, family members or any combination of any of these. In some example embodiments, the use of unique sets of authentication information may be used to maintain statistics as to which transactions were initiated by which authorized personnel and reports of such statistics may be easily generated and provided to the registrant.

The acquirer **191** described in **Figure 2** is identical to the acquirer **191** described in **Figure 1**. Similarly, the structure and processing of the remaining components of the transaction network **190** is identical to that described in **Figure 1**. Thus, from the perspective of the transaction network **190**, the intermediary **230** is indistinguishable from any merchant device **210**.

Thus, instead of an authorized representative presenting a credit card or payment account information at the point of sale, the authorizing instrument **220** forwards authentication information (and in some example embodiments, a subset of the transaction information) to the intermediary **230** from which the intermediary **230** is able to retrieve the payment account information of the registrant and combine it with the partial authorization request from the merchant device **210** to generate an authorization request for transmission to the acquirer **191**. This obviates any need for the credit card to be physically present at the point of sale, or for any payment account information to be disclosed at the point of sale. This also obviates any need for multiple cards to be issued, which in some situations incurs additional fees. In some example embodiments, a subset of transaction information, including without limitation, the merchant identifier, the transaction amount, transaction identifier or any combination of any of these, may be disclosed to an authorized representative, but such information is generally not considered confidential, nor is it likely that such information could be employed to perpetuate a fraud.

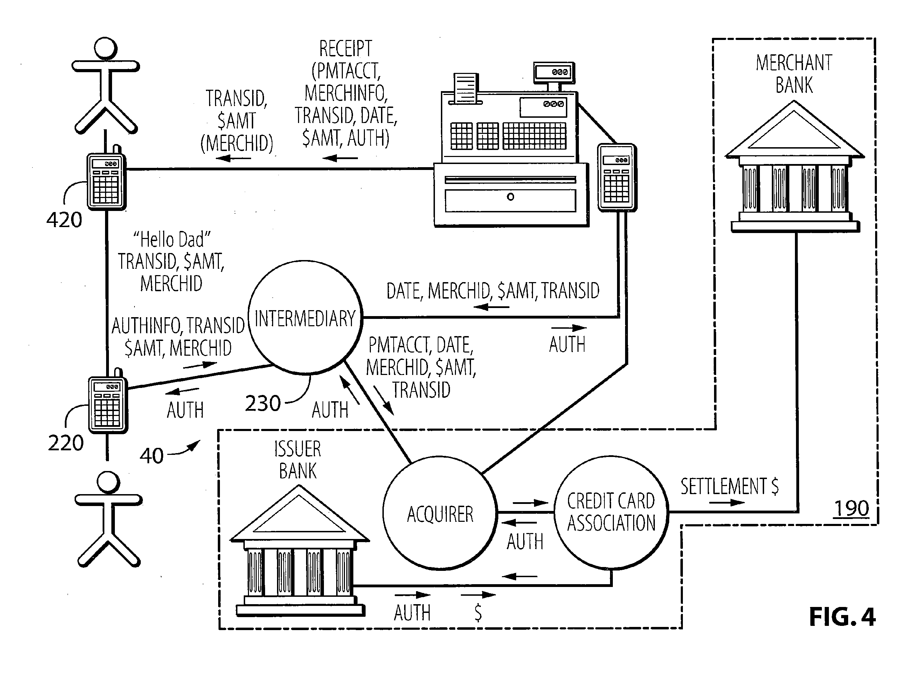

Turning now to **Figure 4**, there is shown a block diagram illustrating an example embodiment of a system and process for effecting a credit card transaction, in accordance with an example embodiment of the present disclosure, by an unregistered purchaser without providing payment account information at the point of sale. An unregistered purchaser is a purchaser who may be from time to time authorized to enter into a transaction on the registrant's behalf, but not to the extent that they would be provided authentication information. For example, an unregistered purchaser may be a distant relative or an employee or acquaintance asked to purchase an item for the authorized representative.

The system, shown generally at **40**, comprises the merchant device **210** at the point of sale, the authorizing instrument **220**, the intermediary **230** at a location remote from the point of sale, and a requesting instrument **420**.

In this example embodiment, however, the authorizing instrument **220** is not in the possession of the unregistered purchaser, but in the possession of the authorized representative. Rather, the unregistered purchaser has possession of the requesting instrument **420** which may be, in some example embodiments, substantially similar in capability and features with the authorizing instrument **220**. The authorizing instrument **220**, in addition to being in data communication with the intermediary **230**, is in data communication with the requesting instrument **420**.

The requesting instrument **420** is in data communication with the authorizing instrument **220**. It is a communication device by which an unregistered purchaser may communicate with the authorizing instrument **220** to request that the authorizing instrument **220** convey authentication information to the intermediary **230**. The requesting instrument **420** may be a wired or wireless telephone, smartphone, personal digital assistant (PDA), pocket, mobile, laptop or desktop computer or any combination of any of these. In some example embodiments, the requesting instrument **420** is a general purpose device routinely carried by an unregistered purchaser, which may incidentally be used to communicate with the authorizing instrument **220**. In some example embodiments, the requesting instrument **420** may be located at the point of sale. In some example embodiments, the requesting instrument **420** may be located remotely from the point of sale, for example, in the context of an online or telephone transaction.

In some example embodiments, the communication link between the requesting instrument **420** and the authorizing instrument **220** may be a wired or wireless telephonic connection, capable of voice or data communication or both, including without limitation at least one node of a public switched telephone network (PSTN) (not shown). In some example embodiments, the PSTN (not shown) makes use of internet communications along a network comprising the Internet, a wired or wireless local area network (LAN), an extranet, a metropolitan area network (MAN), a wide area network (WAN) or any combination of any of these. In some example embodiments, the requesting instrument **420** may be directly connected to such network. In such example embodiments, communications may be conveyed from the requesting instrument **420** to the authorizing instrument **220** by an oral communication, a sequence of touch-tone digits or a data communication.

In some example embodiments, the communication link between the requesting instrument **420** and the authorizing instrument **220** may be by electronic communication, including without limitation, by e-mail or electronic message such as Short Message Service (SMS), Multimedia Message Service (MMS), PIN message, or other conventional information conveyance.

In some example embodiments, a subset of transaction information, obtained from the merchant device **210** including, without limitation, the merchant identifier, the transaction identifier and transaction amount, may be communicated by the requesting instrument **420** to the authorizing instrument **220** for forwarding on to the acquirer **191**.

The mechanism by which the obtained transaction information is provided to the requesting instrument **420** is immaterial to the present disclosure. In some example embodiments, the subset of the transaction information could be provided orally or in written form from a printout at or electronically from the merchant device **210** and transcribed or otherwise entered into the requesting instrument **420**.

In some example embodiments, the subset of the transaction information may be directly entered into an information-conveying framework such as an e-mail message or text message form. In some example embodiments, such information-conveying framework may append other information to the message, including without limitation, a source address, a destination address, a date stamp, a time stamp or any combination of any of these. In some example embodiments, an application residing on the requesting instrument **420** may facilitate such data entry process and may obscure the particular information-conveying framework employed.

An example message format may be in the form:
ddddd.cc*mmmm

Because the payment account transaction is being made at the instance of the unregistered purchaser, the requesting instrument **420** conveys a message to the authorizing instrument **220**, in some example embodiments, containing the subset of the transaction information. If the authorized representative is prepared to authorize the payment account transaction, the authorizing instrument **220** forwards a message to the intermediary **230** containing the authentication information, in some example embodiments together with the subset of the transaction information. In some example embodiments, the authorizing instrument **220** may simply insert the authentication information into the information-conveying framework received from the requesting instrument **420** in an appropriate position, and forward it on to the intermediary **230**. In some example embodiments, an application residing on the authorizing instrument **220** may facilitate such data entry process and may obscure the particular information-conveying framework employed. In some example embodiments, such application may be pre-coded with the authentication information and automatically insert it after the authorized representative responds positively to a request to authorize the transaction attempt.

When received by the intermediary **230**, the message containing the authentication information is processed as described with reference to **Figures 2** and **3**. From the perspective of the intermediary, the authentication information is indistinguishable from the authentication information provided by an authorized representative as shown in **Figures 2** and **3**.

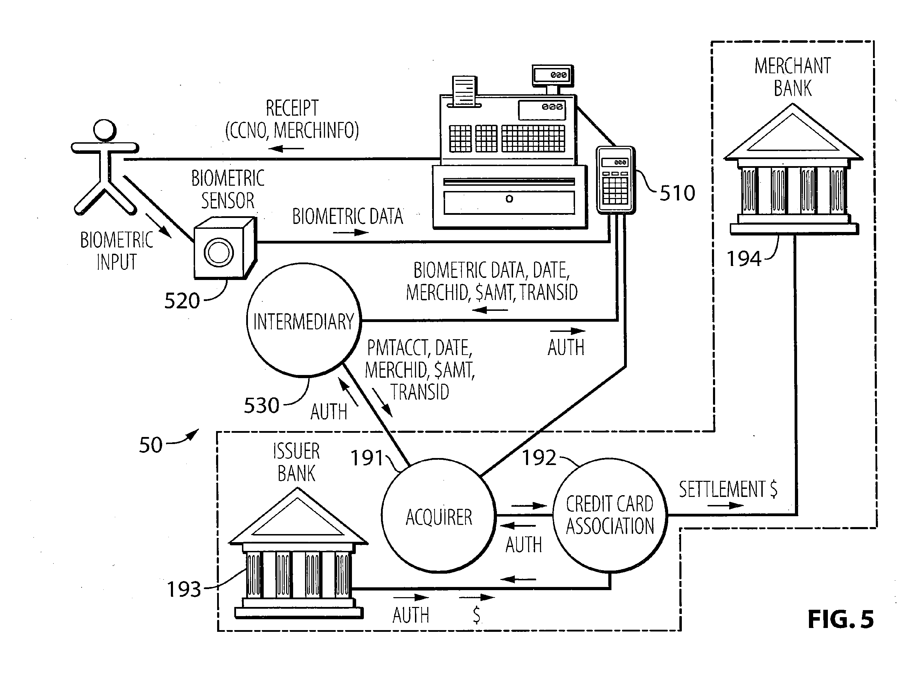

Turning now to **Figure 5**, there is shown a block diagram illustrating an example embodiment of a system and process for effecting a credit card transaction, in accordance with an example embodiment of the present disclosure, in which an authorized representative conveys biometric data to the intermediary **230** through a sensor at the point of sale.

The system, again shown generally at **50**, comprises the merchant device **510** at the point of sale, a sensor **520** at the point of sale, and the intermediary **530** at a location remote from the point of sale. As in the example embodiment of **Figure 2**, the merchant device **510** is in communication with the acquirer **191** and the intermediary **530**. The merchant device **510** is similar in configuration and function to the merchant device **210** of **Figure 2**, but modified in at least one aspect, namely that the merchant device **510** is in data communication with the sensor **520**.

In the example embodiment described in **Figure 5**, the transaction request is initiated by the input selection at the merchant device **510**, as opposed to the swiping of the credit card at the merchant device **510**, manual entry of the payment account information at the keypad **111** or insertion of the data chip into the merchant device **510**. In some example embodiment, these initiating actions remain available at the merchant device **510** for conventional credit card transactions.

Nevertheless, when a transaction request is initiated by the input selection at the merchant device **510**, the partial authorization request, that is, an authorization request comprising some or all of the merchant identifier, transaction date, transaction identifier and transaction amount (but not the payment account information) is generated for transmission to the intermediary **530**. Although no card has been presented to the merchant device **510**, because the partial authorization request does not contain any payment account information, the partial authorization request may be generated and transmitted to the intermediary **230**.

The system **50** does not include an authorizing instrument **220** by which authentication information may be conveyed to the intermediary **530**. Rather, the merchant device **510** awaits the provision, by the sensor **520**, of biometric data, which may be viewed as another form of authentication information. The merchant device **510** transmits the biometric data to the intermediary **530**. In some example embodiments, the partial authorization request and the biometric data are transmitted separately to the intermediary **530**. In such case, in some example embodiments, the merchant device **510** supplies, with the biometric data, a subset of the transaction information including, without limitation, the merchant identifier, the transaction identifier and transaction amount, to facilitate the intermediary **530** associating the payment account information of the registrant associated with the authentication information, with the partial authorization information. In some example embodiments, the partial authorization request and the biometric data are part of a common data transmission to the intermediary **530**, in which case, no separate transaction information is transmitted along with the biometric data.

The sensor **520** is a source of authentication information and may comprise a biometric sensor such as a fingerprint reader, a voice print scanner, a retinal or iris scanner, a DNA scanner or any other sensor capable of reading and recognizing a physiological characteristic or attribute that is consistent and unique to an individual. The sensor **520** is in data communication with the merchant device **510**, such as by a cable or wireless connection. In some example embodiments, the sensor **520** is integral with the merchant device **510**.

The sensor **520** reads biometric data from an authorized representative and forwards the biometric data to the merchant device **510**. The sensor **520** permits the authorized representative to provide authentication to a proposed payment account transaction without disclosing payment account information at the point of sale by swiping the authorized representative or registrant's finger, scanning such person's voice, retina or iris or providing such person's tissue or bodily fluid sample for DNA purposes.

In some example embodiments, the sensor **520** is prompted by the merchant device **510** to obtain such biometric data from the authorized representative after the transaction request is initiated by the input selection at the merchant device **510**.

The intermediary **530** is located remote from the point of sale but in data communication with at least one merchant device **510** and the acquirer **191**. The intermediary **530** receives the partial authorization request and the biometric data from the merchant device **510**, looks up the payment account information corresponding to the registrant using the biometric data, matches up the payment account information with the partial authorization request (in some example embodiments, if the biometric data does not accompany the partial authorization request, using the subset of the transaction information), and generates an authorization request from the partial authorization request and the payment account information, which it forwards to the acquirer **191**.

In addition to generating an authorization request, the intermediary **530** receives, from the acquirer **191**, at least one authorization response corresponding to each authorization request it generates, and forwards it to the entity, in this case, the merchant device **510**, from which the (partial) authorization request emanated.

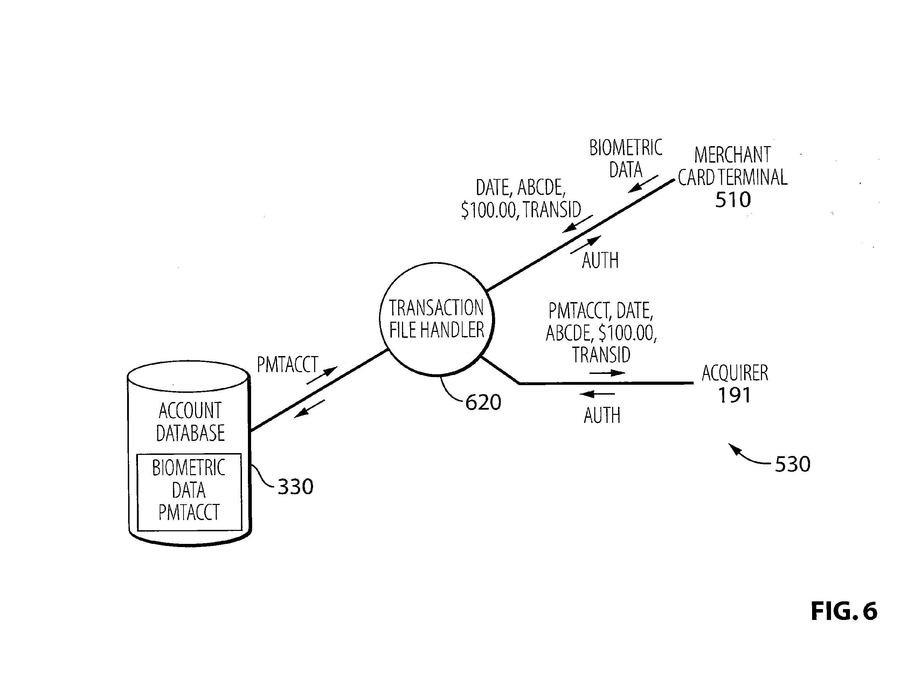

Turning now to **Figure 6**, there is shown a block diagram illustrating an example embodiment of components of the intermediary **530**. It comprises a transaction file handler **620** and the account database **330**.

The transaction file handler **620** is in data communication with the account database **330**, the merchant device **510** and the acquirer **191**. The transaction file handler **620** is similar in configuration and function to the transaction file handler **320** except that it is not in data communication with any client handler **310** from which it receives authentication information. Rather, the transaction file handler **620** receives biometric data from the merchant device **510**, either separate from the partial authorization response (in which case, in some example embodiments, the biometric data is accompanied by a subset of the transaction information), or as part of a common data transmission with the partial authorization request.

The transaction file handler **620** accesses the account database **330** using the biometric data to obtain the payment account information corresponding to the authentication information. If the biometric data arrived separately from the partial authorization response, the transaction file handler **620** also receives partial authorization requests from the merchant device **510** and matches up these partial authorization requests with the payment account information, by using the subset of the transaction information accompanying the biometric data in some example embodiments. When a partial authorization request is matched up with payment account information, the transaction file handler **620** generates an authorization request from this information and forwards it to the acquirer **191** for processing.

The transaction file handler **620** also receives back at least one authorization response from the acquirer **191** corresponding to each authorization request it forwarded to the acquirer **191**. The transaction file handler **620** forwards the authorization response to the merchant device **510** for processing.

The account database **330** maintains payment account information for registrants, together with at least one set of authentication information, such as biometric data of each authorized representative, such as fingerprint, voice print, retinal, iris DNA characteristics or any combination of these) associated with each registrant. If the transaction file handler **620** receives authentication information corresponding to a registrant in the form of biometric data of an authorized representative for such registrant, the registrant's payment account information is returned to the transaction file handler **620** for insertion into an authorization request. A plurality of sets of authentication information in the form of biometric data may be associated with each registrant. Thus, unique sets of authentication information in the form of biometric data may be assigned to authorized representatives, such as business partners, employees, family members or any combination of these. In some example embodiments, the use of unique sets of authentication information may be used to maintain statistics as to which transactions were initiated by which authorized representatives and reports of such statistics may be easily generated and provided to the registrant.

Those having ordinary skill in this art will readily appreciate that rather than providing biometric data at the sensor **520** or using the authorizing instrument **220** to communicate authentication information to the intermediary **530**, the keypad **111** on the merchant device **510** could conceivably be used by the authorized representative to enter authentication information into the merchant card reader **510** directly, so that it could be forwarded to the intermediary **530** in the manner described above for biometric data.

While this is so, directly entering in authentication information into the keypad **111** may raise security concerns about skimming of the authentication information, which is not applicable in the case of biometric data.

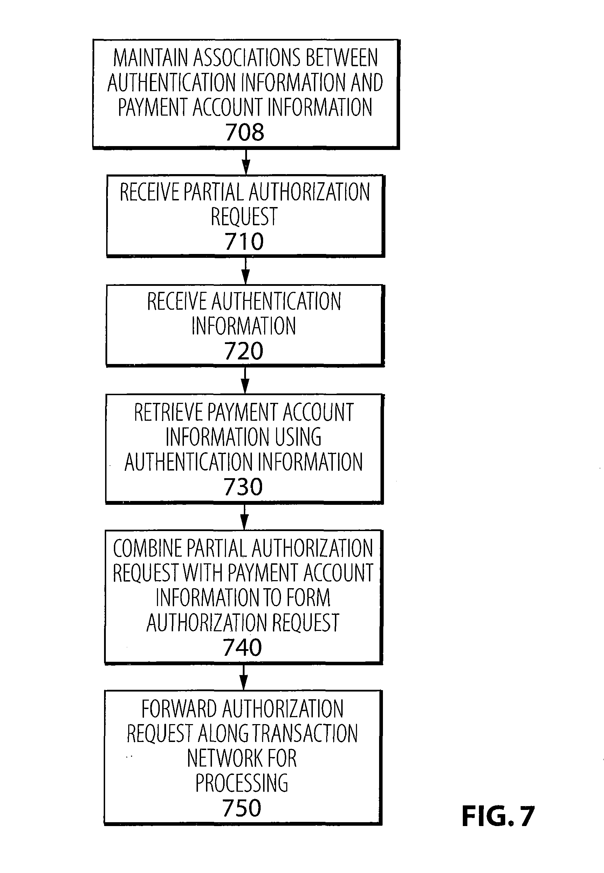

Turning now to **Figure 7**, there is shown a flow chart showing example actions taken in an example embodiment of a method for making a payment account transaction, in accordance with an example embodiment of the present disclosure.

At action **708**, associations between authorization information and payment account information are maintained. As discussed herein, such associations link a registrant's payment account information to authentication information for permitting access to the registrant's payment account.

At action **710**, a partial authorization request is received. As discussed herein, such request is received by the intermediary **230, 530** and is generated by the merchant device **210, 510**. The partial authorization request comprises transaction information such as the merchant identifier, transaction date, transaction identifier and transaction amount.

At action **720**, authentication information is received. As discussed herein, such authentication information is received by the intermediary **230, 530** and is generated by the authorizing instrument **220** or the sensor **520** (and forwarded along the data communication link from the sensor **520** to the merchant card reader **510** and to the intermediary **530**). The authentication information may in some example embodiments be received with a subset of the transaction information.

At action **730**, payment account information is retrieved using the authentication information received. As discussed herein, such payment account information is stored at the intermediary **230, 530**.

At action **740**, the partial authorization request is combined with the payment account information to form an authorization request.

At action **750**, the authorization request is forwarded along the transaction network **190** for processing.

The foregoing describes systems and processing for effecting credit card transactions without disclosing a registrant's payment account information at the point of sale. There are other types of payment account transactions, including without limitation PIN debit card purchases, PayPal and other proprietary forms of electronic fund transactions, including proprietary financing vehicles controlled by the intermediary **220, 520** or the acquirer **191**. PIN debit card purchases differ from credit card purchases in that the funds being applied to the purchase are not borrowed from the issuer bank but taken from the registrant's own funds. The conventional processing of such other payment account transactions are not described herein but are known to those having ordinary skill in this art.

It should be recognized that the principles of the present disclosure may be applied to such other payment account transactions, with little or no modification, such modifications being apparent to those having ordinary skill in this art. Having said this, it bears pointing out that the concerns giving rise to the development of such principles may be less apparent in the context of such transactions.

Further, those having ordinary skill in this art will recognize that the principles of the present disclosure may be applied to permit redemption of points, miles and rewards accumulated through use of payment account instruments including without limitation, credit cards and PIN debit cards in conventional affinity programs. Indeed, it is conceivable that the disclosed systems may incorporate custom affinity programs based on use of the payment account instruments and permit later redemption of accumulated points, miles and rewards. The principles of the present disclosure may also be applied in a similar fashion to gift card services, service providers, such as cellular providers, who apply purchases to a monthly bill or merchants giving credit to make purchases.

In the foregoing disclosure, for purposes of explanation and not limitation, specific details are set forth such as particular architectures, interfaces, techniques, etc. in order to provide a thorough understanding of the present disclosure. However, the present disclosure may be practised in other embodiments that depart from these specific details.

In some instances, detailed descriptions of well-known devices, circuits, and methods are omitted so as not to obscure the description of the present disclosure with unnecessary detail. All statements herein reciting principles, aspects and embodiments of the disclosure, as well as specific examples thereof, are intended to encompass both structural and functional equivalents thereof. Additionally, it is intended that such equivalents include both currently known equivalents as well as equivalents developed in the future, *i.e.*, any elements developed that perform the same function, regardless of structure.

Thus, for example, that block diagrams reproduced herein can represent conceptual views of illustrative components embodying the principles of the technology. Similarly, it will be appreciated that any flow charts, state transition diagrams, pseudocode, and the like represent various processes, which may be substantially represented in computer-readable medium and so executed by a computer or processor, whether or not such computer or processor is explicitly shown.

The present disclosure can be implemented in digital electronic circuitry, or in computer hardware, firmware, software, or in combination thereof. Apparatus of the disclosure can be implemented in a computer program product tangibly embodied in a non-transitory machine-readable storage device for execution by a programmable processor; and methods actions can be performed by a programmable processor executing a program of instructions to perform functions of the disclosure by operating on input data and generating output.

The functions of the various elements including functional blocks labelled as "processors" or "controllers" may be provided through the use of dedicated hardware, as well as hardware capable of executing software in association with appropriate software with sufficient processing power, memory resources, and network throughput capability to handle the necessary workload placed upon it.

When provided by a processor, the functions may be provided by a single dedicated processor, by a single shared processor, or by a plurality of individual processors, some of which may be shared or distributed. Moreover, explicit use of the term "processor" or "controller" should not be construed to_refer exclusively to hardware capable of executing software, and may include, without limitation, digital signal processor (DSP) hardware, read-only memory (ROM) for storing software, random access memory (RAM) and non-volatile storage.

The disclosure can be implemented advantageously on a programmable system including at least one input device, and at least one output device. Each computer program can be implemented in a high-level procedural or object-oriented programming language, or in assembly or machine language, if desired; and in any case, the language can be a compiled or interpreted language.

Suitable processors include, by way of example, both general and specific microprocessors. Generally, a processor will receive instructions and data from a read-only memory or a random access memory or both. Generally, a computer will include one or more mass storage devices for storing data file; such devices include magnetic disks and cards, such as internal hard disks, and removable disks and cards; magneto-optical disks; and optical disks. Storage devices suitable for tangibly embodying computer program instructions and data include all forms of volatile and non-volatile memory, including by way of example semiconductor memory devices, such as EPROM, EEPROM, and flash memory devices; magnetic disks such as internal hard disks and removable disks; magneto-optical disks; CD-ROM and DVD-ROM disks; and buffer circuits such as latches and flip flops. Any of the foregoing can be supplemented by, or incorporated in ASICs (application-specific integrated circuits), FPGAs (field-programmable gate arrays) or DSPs (digital signal processors).

Examples of such types of computer are programmable processing systems suitable for implementing or performing the apparatus or methods of the disclosure. The system may comprise a processor, (which may be referred to as a central processor unit or CPU), which may be implemented as one or more CPU chips, and that is in communication with memory devices including secondary storage, read only memory (ROM), a random access memory, a hard drive controller, or an input/output devices or controllers, and network connectivity devices, coupled by a processor bus.

The secondary storage is typically comprised of one or more disk drives or tape drives and is used for non-volatile storage of data and as an over-flow data storage device if RAM is not large enough to hold all working data. Secondary storage may be used to store programs which are loaded into RAM when such programs are selected for execution. The ROM is used to store instructions and perhaps data which are read during program execution. ROM is a non-volatile memory device which typically has a small memory capacity relative to the larger memory capacity of secondary storage. The RAM is used to store volatile data and perhaps to store instructions. Access to both ROM and RAM is typically faster than to secondary storage.

I/O devices may include printers, video monitors, liquid crystal displays (LCDs), touch screen displays, keyboards, keypads, switches, dials, mice, track balls, voice recognizers, card readers, paper tape readers, or other well-known input devices.

The network connectivity devices may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) or global system for mobile communications (GSM) radio transceiver cards, and other well-known network devices. These network connectivity devices may enable the processor to communicate with an Internet or one or more intranets. With such a network connection, it is contemplated that the processor might receive information from the network, or might output information to the network in the course of performing the above-described method steps. Such information, which is often represented as a sequence of instructions to be executed using the processor, may be received from and outputted to the network, for example, in the form of a computer data signal embodied in a carrier wave. The network connectivity devices may also include one or more transmitter and receivers for wirelessly or otherwise transmitting and receiving signals as are well known to one of ordinary skill in the art.

Such information, which may include data or instructions to be executed using the processor for example, may be received from and outputted to the network, for example, in the form of a computer data baseband signal or signal embodied in a carrier wave. The baseband signal or signal embodied in the carrier wave generated by the network connectivity devices may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods. The processor executes instructions, codes, computer programs, scripts which it accesses from hard disk, floppy disk, optical disk (these various disk based systems may all be considered secondary storage), ROM, RAM, or the network connectivity devices. While only one processor is shown, multiple processors may be present. Thus, while instructions may be discussed as executed by a processor, the instructions may be executed simultaneously, serially, or otherwise executed by one or multiple processors.

Various modifications and variations may be made to the embodiments disclosed herein, consistent with the present disclosure, without departing from the spirit and scope of the present disclosure.

While preferred embodiments are disclosed, this is not intended to be limiting. Rather, the general principles set forth herein are considered to be merely illustrative of the scope of the present disclosure and it is to be further understood that numerous changes covering alternatives, modifications and equivalents may be made without straying from the scope of the present disclosure, as defined by the appended claims.

For example, the various elements or components may be combined or integrated in another system or certain features may be omitted, or not implemented. Also, techniques, systems, subsystems and methods described and illustrated in the various embodiments as discrete or separate may be combined or integrated with other systems, modules, techniques, or methods without departing from the scope of the present disclosure. Other examples of changes, substitutions, and alterations are ascertainable by one skilled in the art and could be made without departing from the spirit and scope disclosed herein.

Further, the foregoing description of one or more specific embodiments does not limit the implementation of the invention to any particular computer programming language, operating system, system architecture or device architecture. Moreover, although some embodiments may include mobile devices, not all embodiments are limited to mobile devices; rather, various embodiments may be implemented within a variety of communications devices or terminals, including handheld devices, mobile telephones, personal digital assistants (PDAs), personal computers, audio-visual terminals, televisions and other devices.

Also, the terms "couple" and "communicate" in any form are intended to mean either a direct or indirect connection through some interface, device, intermediate component or connection, whether electrically, mechanically, chemically, or otherwise.

Moreover, all dimensions described herein are intended solely to be exemplary for purposes of illustrating certain embodiments and are not intended to limit the scope of the disclosure to any embodiments that may depart from such dimensions as may be specified.

Directional terms such as "upward", "downward", "left" and "right" are used to refer to directions in the drawings to which reference is made unless otherwise stated. Similarly, words such as "inward" and "outward" are used to refer to directions toward and away from, respectively, the geometric centre of a device, area or volume or designated parts thereof.

References in the singular form include the plural and *vice versa,* unless otherwise noted.

The terms "including" and "comprising" are used in an open-ended fashion, and thus should be interpreted to mean "including, but not limited to". The terms "example" and "exemplary" are used simply to identify instances for illustrative purposes and should not be interpreted as limiting the scope of the invention to the stated instances. In particular, the term "exemplary" should not be interpreted to denote or confer any laudatory, beneficial or other quality to the expression with which it is used, whether in terms of design, performance or otherwise.

Certain terms are used throughout to refer to particular components. Manufacturers may refer to a component by different names. It is not intended to distinguish between components that differ in name but not in function.

The purpose of the Abstract is to enable the relevant patent office and the public generally, and especially persons having ordinary skill in the art who are not familiar with patent or legal terms or phraseology, to quickly determine from a cursory inspection the nature of the technical disclosure. The Abstract is neither intended to define the invention of this disclosure, which is measured by its claims, nor is it intended to be limiting as to the scope of this disclosure in any way.

According to a broad aspect of the present disclosure there is disclosed an intermediary, in data communication with a merchant device at a point of sale and with a transaction network for effecting a payment account transaction along the transaction network on behalf of a payment account registrant while avoiding disclosure of the registrant's payment account information at the point of sale. The intermediary is located remotely from the point of sale and comprises an account database for maintaining associations between authentication information and the registrant's payment account information and a transaction file handler. The transaction file handler provided for receiving, from the merchant device (210), a partial authorization request comprising transaction information, receiving authentication information of an authorized representative of the registrant, retrieving the registrant's payment account information from the account database using the authentication information, combining the partial authorization request and the payment account information into an authorization request, and forwarding the authorization request along the transaction network for processing.

According to another broad aspect of the present disclosure there is disclosed a system for effecting a payment account transaction initiated at a point of sale along a transaction network on behalf of a payment account registrant while avoiding disclosure of the registrant's payment account information at the point of sale. The system comprises a merchant device at the point of sale, for generating a partial authorization request, an authorizing instrument and the intermediary of the present disclosure.

According to a further broad aspect of the present disclosure there is disclosed a method for effecting a payment account transaction at a point of sale along a transaction network on behalf of a payment account registrant while avoiding disclosure of the registrant's payment account information at the point of sale. The method comprising, at a location remote from the point of sale maintaining associations between authentication information and the registrant's payment account information, receiving a partial authorization request comprising transaction information, receiving authentication information of an authorized representative of the registrant, retrieving the registrant's payment account information using the authentication information, combining a partial authorization request comprising transaction information and the payment account information into an authorization request and forwarding the authorization request along the transaction network (190) for processing.

According to yet another broad aspect of the present disclosure, there is disclosed a computer-readable medium in a system for effecting a payment account transaction initiated at a point of sale along a transaction network on behalf of a payment account registrant while avoiding disclosure of the registrant's payment account information at the point of sale. The medium having stored thereon, computer-readable and computer-executable instructions which, when executed by a processor, cause the processor to perform the method of any one of the methods of the present disclosure.

Aspects of the present disclosure are set out in the following numbered clauses:
1. A system for effecting a payment account transaction initiated at a point of sale along a transaction network on behalf of a payment account registrant while avoiding disclosure of the registrant's payment account information at the point of sale, comprising:
   a merchant device at the point of sale, for generating a partial authorization request;
   an authorizing instrument;
   an intermediary, in data communication with the merchant device, the authorizing instrument and the transaction network, for:
      receiving the partial authorization request from the merchant device;
      receiving authentication information of an authorized representative of the registrant from the authorizing instrument;
      retrieving the registrant's payment account information using the authentication information;
      combining the partial authorization request and the payment account information into an authorization request; and
      forwarding the authorization request along the transaction network for processing.
2. A system according to clause 1 further comprising the authorizing instrument for providing authentication information.
3. A system according to clauses 1 or 2, wherein the partial authorization request comprises transaction information selected from a group consisting of a merchant identifier, a transaction identifier, a transaction date, a transaction amount and any combination of any of these.
4. A system according to clause 3, the authorizing instrument for providing a subset of the transaction information with the authentication information to facilitate the intermediary combining the partial authorization request with the payment account information.
5. A system according to clause 3 or 4, wherein at least a subset of the transaction information is obtained by the merchant device from a cash register in data communication with the merchant device.
6. A system according to any one of clauses 1 through 5, wherein the partial authorization request is generated by an input selection at the merchant device.
7. A system according to any one of clauses 1 through 5, wherein the authorizing instrument is located remotely from the point of sale.
8. A system according to clause 1, wherein the authorizing instrument is in data communication with the intermediary for directly transmitting the authentication information.
9. A system according to clause 8, the authorizing instrument having an electronic communication capability for transmitting the authentication information.
10. A system according to any one of clauses 1 through 9, the authorizing instrument for transmitting the authentication information to the intermediary in response to a request from a requesting instrument.
11. A system according to clause 1, wherein the authorizing instrument is a sensor for obtaining biometric data unique to the authorizing representative.
12. A system according to clause 11, wherein the sensor is in data communication with the merchant device for providing biometric data to the intermediary through the merchant device.
13. A system according to clause 12, wherein the biometric data is provided by the merchant device in a common data transmission with the partial authorization response.
14. A system according to any one of clauses 1 through 13, wherein the authentication information comprises information selected from a group consisting of an account identifier, a user identifier, a login, a password, fingerprint biometric data, voiceprint biometric data, retinal biometric data, iris biometric data, DNA biometric data and any combination of any of these.
15. A system according to any one of clauses 1 through 14, wherein the authentication information is specific to one authorized representative of the registrant.
16. A system according to any one of clauses 1 through 15, wherein the payment account information comprises information selected from a group consisting of an account number, an account name, security code, personal information number (PIN), date of birth, home address, other personal information known only to a legitimate registrant and any combination of any of these.
17. A system according to any one of clauses 1 through 16 wherein the merchant device is a merchant card terminal.
18. A method for effecting a payment account transaction at a point of sale along a transaction network on behalf of a payment account registrant while avoiding disclosure of the registrant's payment account information at the point of sale, comprising, at a location remote from the point of sale:
   maintaining associations between authentication information and the registrant's payment account information;
   receiving a partial authorization request comprising transaction information;
   receiving authentication information of an authorized representative of the registrant;
   retrieving the registrant's payment account information using the authentication information;
   combining a partial authorization request comprising transaction information and the payment account information into an authorization request; and
   forwarding the authorization request along the transaction network for processing.
19. A method according to clause 18, wherein the action of receiving authentication information comprises receiving a subset of the transaction information.
20. A method according to clause 19, wherein the action of combining comprises matching the subset of transaction information received with the authentication information to the transaction information in the partial authorization request.
21. A method according to any one of clauses 18 through 20, further comprising receiving an authorization response from the transaction network.
22. A method according to clause 21, further comprising forwarding the authorization response to a source of the partial authorization request.
23. An intermediary, in data communication with a merchant device at a point of sale and with a transaction network for effecting a payment account transaction along the transaction network on behalf of a payment account registrant while avoiding disclosure of the registrant's payment account information at the point of sale, the intermediary being located remotely from the point of sale and comprising:
   an account database for maintaining associations between authentication information and the registrant's payment account information; and
   a transaction file handler for:
      receiving, from the merchant device, a partial authorization request comprising transaction information;
      receiving authentication information of an authorized representative of the registrant;
      retrieving the registrant's payment account information from the account database using the authentication information;
      combining the partial authorization request and the payment account information into an authorization request; and
      forwarding the authorization request along the transaction network for processing.
24. An intermediary according to clause 23, wherein the account database maintains associations between authentication information and the registrant's payment account information.
25. An intermediary according to clause 23 or 24, wherein the intermediary further comprises a client handler for processing communications from an authorizing instrument providing the authentication information.
26. An intermediary according to any one of clauses 23 through 25, the transaction file handler for receiving a subset of the transaction information with the authentication information to facilitate combining the partial authorization request with the payment account information.
27. A computer-readable medium in a system for effecting a payment account transaction initiated at a point of sale along a transaction network on behalf of a payment account registrant while avoiding disclosure of the registrant's payment account information at the point of sale, the medium having stored thereon, computer-readable and computer-executable instructions which, when executed by a processor, cause a processor to perform actions comprising:
   receiving a partial authorization request comprising transaction information;
   receiving authentication information of an authorized representative of the registrant;
   retrieving the registrant's payment account information using the authentication information;
   combining a partial authorization request comprising transaction information and payment account information into an authorization request; and
   forwarding the authorization request along the transaction network for processing.

Other embodiments consistent with the present application will become apparent from consideration of the specification and the practice of the disclosure disclosed herein.

Accordingly the specification and the embodiments disclosed therein are to be considered examples only, with a true scope and spirit of the disclosure being disclosed by the following numbered claims:

## Claims

1. An intermediary (230), in data communication with a merchant device (210) at a point of sale and with a transaction network (190) for effecting a payment account transaction along the transaction network (190) on behalf of a payment account registrant while avoiding disclosure of the registrant's payment account information at the point of sale, the intermediary (230) being located remotely from the point of sale and comprising:
an account database (330) for maintaining associations between authentication information and the registrant's payment account information; and
a transaction file handler (320) for:
receiving, from the merchant device (210), a partial authorization request comprising transaction information;
receiving authentication information of an authorized representative of the registrant;
retrieving the registrant's payment account information from the account database (330) using the authentication information;
combining the partial authorization request and the payment account information into an authorization request; and
forwarding the authorization request along the transaction network (190) for processing.

2. An intermediary according to claim 1, wherein the intermediary (230) further comprises a client handler (310) for processing communications from an authorizing instrument (220) providing the authentication information.

3. An intermediary according to claim 1 or 2, the transaction file handler (320) for receiving a subset of the transaction information with the authentication information to facilitate combining the partial authorization request with the payment account information.

4. An intermediary according to any preceding claim wherein the partial authorization request comprises transaction information selected from a group consisting of a merchant identifier, a transaction identifier, a transaction date, a transaction amount and any combination of any of these.

5. An intermediary according to any preceding claim, wherein the authentication information comprises information selected from a group consisting of an account identifier, a user identifier, a login, a password, fingerprint biometric data, voiceprint biometric data, retinal biometric data, iris biometric data, DNA biometric data and any combination of any of these.

6. An intermediary according to any preceding claim, wherein the authentication information is specific to one authorized representative of the registrant.

7. An intermediary according to any preceding claim, wherein the payment account information comprises information selected from a group consisting of an account number, an account name, security code, personal information number (PIN), date of birth, home address, other personal information known only to a legitimate registrant and any combination of any of these.

8. A system for effecting a payment account transaction initiated at a point of sale along a transaction network (190) on behalf of a payment account registrant while avoiding disclosure of the registrant's payment account information at the point of sale, comprising:
a merchant device (210) at the point of sale, for generating a partial authorization request;
an authorizing instrument (220); and
an intermediary (23) according to any preceding claim.

9. A system according to claim 8, the authorizing instrument (220) for providing a subset of the transaction information with the authentication information to facilitate the intermediary (230) combining the partial authorization request with the payment account information.

10. A system according to claim 8 or 9, the authorizing instrument for transmitting the authentication information to the intermediary (23) in response to a request from a requesting instrument (420).

11. A method for effecting a payment account transaction at a point of sale along a transaction network (190) on behalf of a payment account registrant while avoiding disclosure of the registrant's payment account information at the point of sale, comprising, at a location remote from the point of sale:
maintaining associations between authentication information and the registrant's payment account information (708);
receiving a partial authorization request comprising transaction information (710);
receiving authentication information of an authorized representative of the registrant (720);
retrieving the registrant's payment account information using the authentication information (730);
combining a partial authorization request comprising transaction information and the payment account information into an authorization request (740); and
forwarding the authorization request along the transaction network (190) for processing (750).

12. A method according to claim 11, wherein the action of receiving authentication information (720) comprises receiving a subset of the transaction information.

13. A method according to claim 11 or 12, wherein the action of combining (740) comprises matching the subset of transaction information received with the authentication information to the transaction information in the partial authorization request.

14. A method according to any one of claims 11 through 13, further comprising:
receiving an authorization response from the transaction network (190); and
forwarding the authorization response to a source of the partial authorization request.

15. A computer-readable medium in a system for effecting a payment account transaction initiated at a point of sale along a transaction network (190) on behalf of a payment account registrant while avoiding disclosure of the registrant's payment account information at the point of sale, the medium having stored thereon, computer-readable and computer-executable instructions which, when executed by a processor, cause the processor to perform the method of any one of claims 11 through 14.
